(19) Europäisches Patentamt
European Patent Office
Office européen des brevets

(11) **EP 1 818 215 A2**

(12) **EUROPEAN PATENT APPLICATION**
published in accordance with Art. 158(3) EPC

(43) Date of publication:
**15.08.2007 Bulletin 2007/33**

(51) Int Cl.:
***B60R 1/08*** (2006.01)   ***G02F 1/157*** (2006.01)
***G02F 1/163*** (2006.01)

(21) Application number: **05793009.1**

(22) Date of filing: **14.10.2005**

(86) International application number:
**PCT/IB2005/003065**

(87) International publication number:
**WO 2006/040668 (20.04.2006 Gazette 2006/16)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **15.10.2004 ES 200402444**

(71) Applicant: **Fico Mirrors, S.A.**
**08028 Barcelona (ES)**

(72) Inventors:
• **PERSON MILLARUELO, Carles**
**E-08004 Barcelona (ES)**
• **PORQUERAS OREA, Isidre**
**E-43001 Tarragona (ES)**

(74) Representative: **Gislon, Gabriele**
**Torner, Juncosa i Associats, S.L.**
**c/ Bruc, 21**
**08010 Barcelona (ES)**

(54) **METHOD OF CONTROLLING AN ELECTROCHROMIC MIRROR AND AN ELECTROCHROMIC SYSTEM WHICH ARE INTENDED FOR A MOTOR VEHICLE**

(57) The method comprises: a) detecting the incidence on the mirror of a light signal with a light intensity above a pre-determined threshold; b) darkening said electrochromic mirror to a pre-fixed maximum level of darkness, upon a detection; c) lightening said electrochromic mirror to a minimum level of darkness, after an end of said light signal incidence on said electrochromic mirror, thereby viewing of the exterior of the vehicle through the electrochromic mirror is facilitated; d) lightening or darkening the electrochromic mirror to an intermediate level; e) detecting the incidence on the mirror of a subsequent light signal with a light intensity above a pre-determined threshold; f) darkening the electrochromic mirror from the intermediate level to a maximum level of darkness upon said detection of step e); and g) returning the electrochromic mirror to said intermediate level of darkness after an end of said subsequent light signal incidence on the electrochromic mirror.

Fig. 2

EP 1 818 215 A2

## Description

### Field of the Invention

In a first aspect, the present invention generally relates to a method for controlling an electrochromic mirror applicable to a rearview mirror of a motor vehicle, and more specifically to a method for improving the efficiency of an electrochromic mirror against repetitive glares.

In a second aspect, the invention also relates to an electrochromic system applicable to a rearview mirror of a motor vehicle using the proposed control method.

### Prior State of the Art

The problem of glaring during driving is really important because it affects the abilities of the driver of a vehicle. Glare can be caused both by vehicles frontally approaching the mentioned vehicle and by vehicles following it. Said vehicles cause glare because they are driven with the high beams activated or with a wrong low beam adjustment. Furthermore, due to the increase in the number of four-wheel -drive or family type vehicles (which have headlights located at a greater height than standard vehicles), the problem has increased considerably.

Glare can basically be described as the sensation caused by a light level in the field of vision which is considerably greater than the level for which the human eye is adapted. Glare interferes with visual perception, causes irritation, discomfort and even loss of visual performance. This also considerably increases eye fatigue.

In the context of a healthy driver, glare can be divided into two main categories:

> *Blinding glare:* The sensation of blindness is so severe that no object can be seen or easily distinguished for a considerable time even after the stimulus has disappeared. This is the typical glare suffered when the driver of a vehicle approaching frontally forgets to deactivate the high beams.
> *Discomfort glare:* This is the glare causing discomfort or irritation without interfering in the visual performance. However, it has been shown that this type of glare can cause fatigue and therefore cause the driver to make a mistake.

Blinding glare is the most severe because it seriously harms the visual function of the driver and does not allow him/her to make accurate decisions. An additional effect, "photostress", also known as Troxler's effect, further occurs. Troxler's effect describes the fact that once the cause of the glare has disappeared, the visual functions of the driver are still affected for a certain time. This effect can increase the reaction time of the driver up to 1.4 seconds.

Despite the fact that discomfort glare does not generally harm vision seriously, it is also undesirable because it can startle or distract the driver. It can also cause blinking, half-closed eyes, eye aversion and fatigue. The ability to face discomfort glare varies depending on the time it occurs and on the individual suffering from it but as a general rule, the older the driver the worse will the effects be.

Several solutions have been proposed for this problem and have been available on the market for some time. The use of prismatic mirrors was historically the first solution. These mirrors have two driving positions, a high reflectance position and another low reflectance position which can be switched depending on whether or not a glaring condition exists. The main drawbacks of this system are that it can only be applied to the inner mirror and that it further normally requires the driver's intervention.

The first mirrors with the capacity to electrically adjust the light intensity, also known as electrochromic mirrors, appeared about twenty years ago, which mirrors can continuously adjust their reflectance between a high reflectance state and a low reflectance state, typically between 70% and 7%. These devices incorporate an electronic activation unit controlling the glaring conditions and automatically deciding when to darken the mirror. A typical configuration uses two light sensors, one sensor for controlling the environmental light and the other sensor for controlling the light coming from the behind, which light causes glare when it is reflected in the mirror. Depending on the severity of the glaring condition, the activation unit decides to darken the mirror to reduce the amount of reflected light and thus reduce the glare. The "decision-making algorithm" of these systems is quite simple: while the glare persists, the system keeps the mirror darkened, and once the glaring condition has disappeared, the system makes the mirror return to its high reflectance level. A state-of-the-art electrochromic mirror takes approximately five to twelve seconds to change from a high reflectance state to a low reflectance state.

Nevertheless, more attention should be paid to the physiological processes controlling the adaptation of the eye against glare, mainly as regards the movements of the pupil and the adaptation threshold of the sensitive cells in the eye. The first mechanism for reducing the amount of light is the reduction of the pupil diameter. However, the pupil has a response time of approximately 300 ms before its starts contracting. This time increases as individuals grow old. Furthermore, the speed at which the pupil can contract also decreases with age. It can therefore be concluded that the older the individuals, worse is the response of their pupils against glare. When the contraction of the pupil is not enough to correct the glaring situation, the sensitive cells change their response. This second mechanism normally needs from five to thirty minutes to be completed.

Taking into account these basic notions on eye physiology, it is possible to deduce that the sensitivity to glare depends on three main factors:

*1) Age:* The primary factor when determining the individual differences in the sensitivity to both blinding and discomfort glare is the person's age, due to his or her slow physiological adaptability and to his or her longer recovery time against "photostress" (Troxler's effect).

*2) Glare intensity:* It is obvious that the veiling luminosity is directly proportional to the intensity of the glare source, and therefore the glare is proportional to the luminosity of the front headlights of vehicles.

*3) Frequency:* If the environment has large contrasts, for example, while driving at night, the eye has to adapt from low light levels to high light levels and vice versa in short time intervals. This transitional adaptation soon ends in a visual fatigue increasing the sensitivity to glare.

It seems to be clear that despite the fact that a common electrochromic rearview mirror can aid in reducing glare, especially at night, its performance, upon using the aforementioned conventional "decision-making algorithm" is not enough because these mirrors cannot prevent the first "high intensity light impact" associated with glare or the repetitive glare caused by a closely following vehicle.

An example of a system using one of said electrochromic rearview mirrors is the one proposed in patent application WO99/22964A1, relating to an automatic light dimming rear-view mirror system for motor-vehicles, which generally comprises an electrochromic mirror element the degree of reflection of which can be modified by applying constant voltage. Said system comprises sensors to detect environmental light and the glaring lights of motor vehicles coming from behind. It also includes a control unit converting the sensor signals into a constant control voltage to activate the electrochromic element, as well as a power supply for feeding the sensors and the control unit. No methods of use different to that provided by the aforementioned conventional algorithm are proposed.

On the other hand, an example of a proposal which intends to improve the control of an electrochromic rearview mirror against glaring situations is the one provided by patent application US2004/0099786, relating to an anti-glare rearview mirror assembly and to a method for controlling the reflectance thereof. The assembly includes an electrochromic rearview mirror, two rearward light sensors, and a comparative controller. The sensors are located in two different partially overlapping regions to detect the incidence of a glaring signal in said two regions. The intensities of the incident light in the two regions are compared to obtain a difference, according to which the reflectance of the electrochromic rearview mirror is adjusted. A more realistic control of the electrochromic mirror is thus intended to be achieved, although with a very specific application which only takes into account the different degrees of incidence that a glaregenerating light signal can have on a same rearview mirror, but not how to adapt the control of the mirror to not only the intensity of the light causing the glare but also to other characteristics of the phenomenon, such as its repetition over time for example.

Description of the Invention

It is necessary to provide a method for controlling an electrochromic mirror improving the operation thereof compared to that obtained up until now with the use of the aforementioned "conventional decision-making algorithm", as well as contemplating the handling of other issues that are not considered by the state of the art, specifically those referring to palliating the effects caused by the first "high intensity light impact" associated to glare, and those caused by the repetitive glare caused by a closely following vehicle.

In a first aspect the present invention relates to a method for controlling an electrochromic mirror applicable to a rearview mirror of a motor vehicle, of the type comprising carrying out the following sequential steps:

a) detecting the incidence on said mirror of a light signal with a light intensity above a certain predetermined threshold which can cause the mirror to darken to a pre-fixed maximum level of darkness, said signal being representative of a glare,

b) darkening said electrochromic mirror to a pre-fixed maximum level of darkness, upon at least one of said detections, to confront said glare, and

c) lightening the electrochromic mirror to a minimum level of darkness, after an end of said light signal incidence on said electrochromic mirror, thereby viewing of the exterior of the vehicle through the electrochromic mirror is facilitated.

Said steps a), b) and c) are already known in the state of the art and are specifically contemplated by the "conventional decision-making algorithm" explained above.

The method proposed by the present invention is characterized by the fact that when at least the conventional steps a) and b) have occurred a certain number of times in a defined time period, it is proposed to additionally carry out the following steps, also in a linked sequential manner, to prevent a repetitive glare:

d) lightening or darkening, depending on the starting level of darkness of the mirror, said electrochromic mirror to an intermediate level,

e) detecting the incidence on said mirror of a subsequent light signal with a light intensity above a certain predetermined threshold, representative of a subsequent glare,

f) darkening said electrochromic mirror from said intermediate level to a maximum level of darkness, upon said detection of step e), to dim said subsequent glare, and

g) returning said electrochromic mirror to said intermediate level of darkness, after an end of said subsequent light signal incidence on the electrochromic mirror. Step d), along with those steps following it in a linked sequential manner may begin either after one step b), in which case the mirror will lighten to said intermediate level, or after one step c), in which case the mirror will darken to said intermediate level. For a preferred embodiment the method comprises the following additional step:

h) returning said electrochromic mirror to said minimum level of darkness after a first predetermined time period without incidence of a light signal on the electrochromic mirror, said sequential linked steps d) to g) concluding.

Both in said step c) and in said step g) the possibility is contemplated that such steps, either one of the two or both, do not occur immediately after the light signal is no longer incident on the mirror but rather after second and third predetermined time periods, respectively, after said end of the incidence, said first and second predetermined time periods being equal or different depending on the embodiment.

Said maximum level of darkness preferably depends on the light intensity and the duration of said incident light signal causing said glare, and on the outside environmental light.

In a second aspect, the invention also relates an electrochromic system applicable to a rearview mirror of a motor vehicle, of the type comprising:

-   at least one electrochromic mirror as said rearview mirror,
-   at least one first light sensor to monitor the environmental light surrounding the rearview mirror,
-   at least one second light sensor to monitor the incident light on the electrochromic rearview mirror,
-   at least one control unit for controlling said electrochromic rearview mirror, associated to said first and second light sensors,

said control unit being adapted to control the electrochromic mirror according to the method proposed by the invention in its first aspect.

Brief Description of the Drawings

The foregoing and other features and advantages of the invention will become clearer from the following description of an embodiment illustrated in the attached drawings that should be considered as an illustrative and non-limiting example.

In said drawings:

Fig. 1 is a graphic representation showing the performance, in response to a glaring condition that repeats over time, of an electrochromic mirror controlled by means of the "conventional decision-making, algorithm" that represents the state of the art,
Fig. 2 is a graphic representation showing the performance, in response to a glaring condition that repeats over time, of an electrochromic mirror controlled by means of the method proposed by the present invention, and
Fig. 3 graphically shows an enlarged and comparative view of the performance, in response to a glaring condition, of an electrochromic mirror controlled conventionally (indicated in the graph as "standard darkening") and of an electrochromic mirror controlled by means of the method proposed by the present invention (indicated in the graph as "predictive darkening").

Detailed Description of several Embodiments

A method is proposed that implements an improved decision-making algorithm to greatly improve the final functionality of the electrochromic rearview mirror. The key point is based on the fact that the proposed method can recognize situations in which continuous glares or dazzles occur, such as for example on highways with a high traffic density, secondary roads with a lot of curves with vehicles following the vehicle that incorporates the electrochromic mirror, and many others.

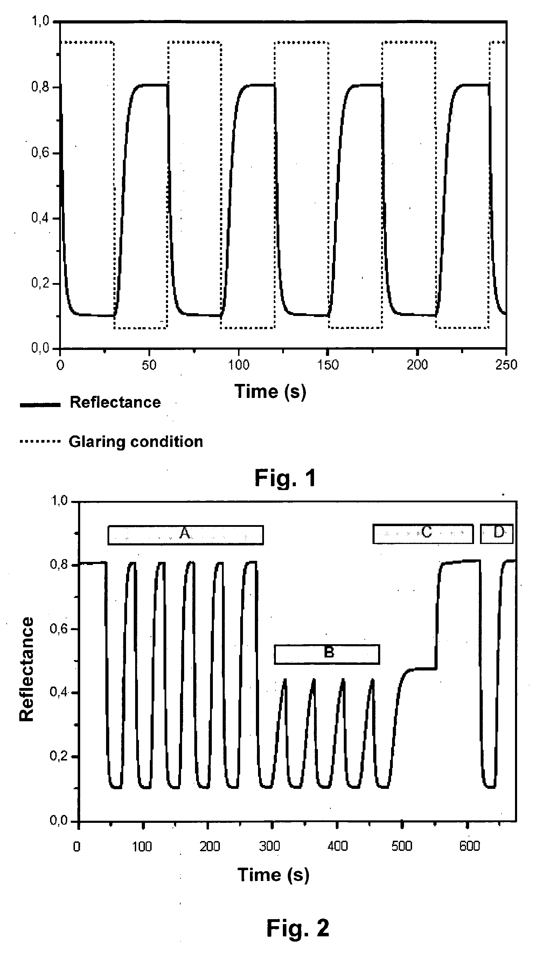

In a first aspect, the present invention relates to a method for controlling an electrochromic mirror, applicable to a rearview mirror of a motor vehicle, the basic operation of which can be seen in Figure 2.

The method first comprises carrying out the following sequential steps, which are already known in the state of the art, and specifically contemplated by the "conventional decision-making algorithm" explained above:

a) detecting the incidence on said mirror of a light signal with a light intensity above a certain predetermined threshold, which can cause the mirror to darken to a pre-fixed maximum level of darkness, said signal being representative of a glare and represented in the attached figures with a discontinuous dotted line and referred to as "glaring condition",
b) darkening said electrochromic mirror to said pre-fixed maximum level of darkness (indicated in the figures as minimum reflectance), upon at least one of said detections, to confront said glare, and
c) lightening the electrochromic mirror to a minimum level of darkness (indicated in the figures as maximum reflectance), after an end of said light signal incidence on said electrochromic mirror, thereby viewing of the exterior of the vehicle through the electrochromic mirror is facilitated.
As previously mentioned, said steps a), b) and c) are representative of the traditional way of controlling an electrochromic mirror in response to a glaring condition, in this case, repeated over time. For this reason said steps a), b) and c) can be seen both in Fig. 1 (which reflects the state of the art), in which said glaring condition is repeated four times, and in part of Fig. 2, specifically in area A indicated therein (in which said condition is repeated five times), in which the graph relating to the glaring condition has been omitted for the sake of clarity and only the reflectance of the electrochromic mirror in response to said condition or conditions is shown.

What really characterizes the method proposed by the present invention is that when at least conventional steps a) and b) have occurred a certain number of times (five in the embodiment shown in Fig. 2) in a defined time period, a series of additional steps, which are also linked in a sequential manner, are proposed to be carried out in order to prevent a repetitive glare. In other words, when it is detected that the glare condition is repetitive, it is deduced or predicted that it is very likely that it will keep on repeating, i.e. that there will exist new light signals striking on the mirror and generating new glares, and therefore the mirror is controlled in a manner that is more suited to the circumstances it is and it is expected that it will continue to undergoing.

For the embodiment shown in Fig. 2, the additional proposed steps are carried out after one step b) and are the following (the result of carrying them out in the mirror is indicated in area B of Fig. 2):

d) lightening said electrochromic mirror to an intermediate level,

e) detecting the incidence on said mirror of a subsequent light signal with a light intensity above a certain predetermined threshold, representative of a subsequent glare,

f) darkening said electrochromic mirror from said intermediate level to a maximum level of darkness, upon said detection, and

g) returning said electrochromic mirror to said intermediate level of darkness, after an end of said subsequent light signal incidence on the electrochromic mirror.

For another embodiment (not shown), said step d) could start after one step c), in which case the mirror would darken to the mentioned intermediate level instead of lightening.

For the preferred embodiment shown in Fig. 2, the proposed method further comprises (see area C of Figure 2):

h) returning said electrochromic mirror to said minimum level of darkness after a first predetermined time period without incidence of a light signal on the electrochromic mirror, said sequential linked steps d) to g) concluding.

Area D of Fig. 2 refers to the conventional performance of the electrochromic mirror, analyzed through the reflectance, after a subsequent and single glaring condition, i.e. to the above-defined steps a), b) and c), and represents the ending of the use of additional steps d) to h), and the return to the conventional control mode.

For other embodiments not shown, both in said step c) and in said step g) the possibility is contemplated that such steps, either one of the two or both, do not occur immediately after the light signal is no longer incident on the mirror but rather after second and third predetermined time periods, respectively, after said end of the incidence, said first and second predetermined time periods being equal or different depending on the embodiment.

In addition, said maximum level of darkness depends on the light intensity and the duration of said incident light signal causing said glare, and on the outside environmental light, and the reflectance is expressed in the attached Figures as a fraction of one, according to the following fraction:

$$\text{Reflectance} = \frac{\text{Reflected light}}{\text{Incident light}}$$

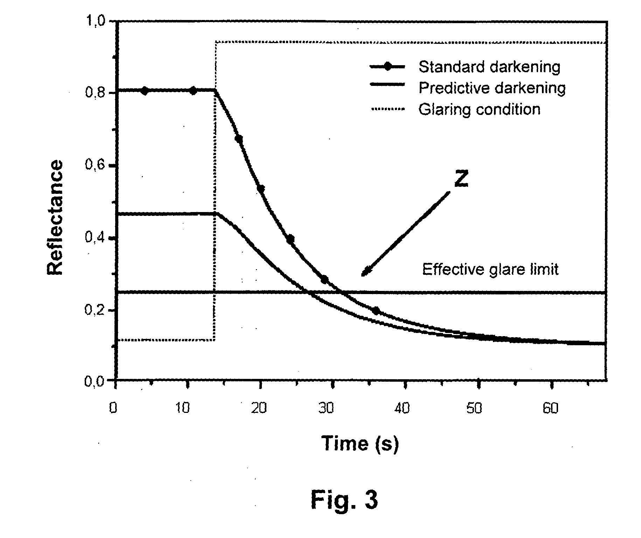

An important advantage resulting from the use of the method proposed by the present invention can be seen in Figure 3, which shows, in an enlarged and comparative view, the performance, in response to a glaring condition, of an electrochromic mirror controlled in a conventional manner (indicated in the graph as "standard darkening") and of an electrochromic mirror controlled by means of the method proposed by the present invention (indicated in the graph as "predictive darkening"). It can be seen that the time in which the electrochromic mirror reaches a reflectance level Z achieving a negligible glare (indicated as "effective glare limit" in Fig. 3) is much less using the proposed method than the time that is needed to reach the same level Z if the "conventional decision-making algorithm" is used. This means that the time that the driver is exposed to a discomfort glare level is considerably reduced, generally by over one second.

This performance greatly reduces visual fatigue of the driver due to the fact that when a new glaring condition occurs, the amount of light reflected towards the eyes of the driver is much less than when the mirror is lightened to the mentioned minimum level (step c)).

In a second aspect the invention also relates to an electrochromic system (not shown) applicable to a rearview mirror of a motor vehicle, of the type comprising:

- at least one electrochromic mirror as said rearview mirror,
- at least one first light sensor to monitor the environmental light surrounding the rearview mirror,
- at least one second light sensor to monitor the incident light on the electrochromic rearview mirror,
- at least one control unit for controlling said electrochromic rearview mirror, associated to said first and second light sensors,

said control unit being adapted to control the electrochromic mirror according to the method proposed by the first aspect of the invention.

A person skilled in the art may introduce changes and modifications in the described embodiment without departing from the scope of the invention as it is defined in the attached claims.

**Claims**

1. A method for controlling an electrochromic mirror, applicable to a rearview mirror of a motor vehicle, of the type comprising carrying out the following linked sequential steps:

   a) detecting the incidence on said mirror of a light signal with a light intensity above a certain predetermined threshold,
   b) darkening said electrochromic mirror to a prefixed maximum level of darkness, upon at least one of said detections, and
   c) lightening the electrochromic mirror to a minimum level of darkness, after an end of said light signal incidence on said electrochromic mirror, thereby viewing of the exterior of the vehicle through the electrochromic mirror is facilitated, **characterized in that** when at least steps a) and b) have occurred a certain number of times in a defined time period, it comprises carrying out the following steps, also linked in a sequential manner, in order to prevent a repetitive glare:
   d) lightening or darkening said electrochromic mirror to an intermediate level,
   e) detecting the incidence on said mirror of a subsequent light signal with a light intensity above a certain predetermined threshold,
   f) darkening said electrochromic mirror from said intermediate level to a maximum level of darkness, upon said detection of step e), and
   g) returning said electrochromic mirror to said intermediate level of darkness, after an end of said subsequent light signal incidence on the electrochromic mirror.

2. A method according to claim 1, **characterized in that** it further comprises:

   h) returning said electrochromic mirror to said minimum level of darkness after a first predetermined time period without incidence of a light signal on the electrochromic mirror, said sequential linked steps d) to g) concluding.

3. A method according to claim 1, **characterized in that** said step c) occurs after a second predetermined time period after said end of the incidence of the light signal on the electrochromic mirror.

4. A method according to claim 3, **characterized in that** said step g) occurs after a third predetermined time period after said end of the incidence of the subsequent light signal on the electrochromic mirror.

5. A method according to claim 4, **characterized in that** said first and second predetermined time periods are equal.

6. A method according to claim 4, **characterized in that** said first and second predetermined time periods are different.

7. A method according to claim 1, **characterized in that** said maximum level of darkness depends on the light intensity and the duration of said incident light signal causing said glare, and on the outside environmental light.

8. An electrochromic system applicable to a rearview mirror of a motor vehicle, of the type comprising:

   - at least one electrochromic mirror as said rearview mirror,
   - at least one first light sensor to monitor the environmental light surrounding the rearview mirror,
   - at least one second light sensor to monitor the incident light on the electrochromic rearview mirror,
   - at least one control unit for controlling said electrochromic rearview mirror, associated to said first and second light sensors,

   **characterized in that** said control unit is adapted to control the electrochromic mirror according to the method of claim 1.

—— Reflectance

······· Glaring condition

**Fig. 1**

**Fig. 2**

**Fig. 3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9922964 A1

- US 20040099786 A